# EUROPEAN PATENT APPLICATION

(11) **EP 1 533 509 A1**
(43) Date of publication of application: **25.05.2005**
(21) Application number: 02743671.6
(22) Date of filing: 20.06.2002
(51) Int. Cl.: F02F 3/00, F02F 1/18, F02F 5/00, F02B 23/00

(54) **RECIPROCATING ENGINE**

(71) Applicant: Bando Kiko Co., Ltd, Tokushima-shi, Tokushima 770-0871 (JP)
(72) Inventor: BANDO, Shigeru, Tokushima-shi, Tokushima 770-0862 (JP)
(74) Representative: Senior, Alan Murray
(86) International application number: PCT/JP2002/006184
(87) International publication number: WO 2004/001215

(57) **Abstract**

A reciprocating engine (1) includes a cylinder (2); a piston (3) reciprocating in the cylinder (2) in a direction X; a connecting rod (5) rotatably coupled at its small end portion (4) to the piston (3) through a piston pin (4a); ring grooves (7, 8) disposed adjacent to each other in the direction X and formed in a peripheral side surface (6) of the piston (3); piston rings (9, 10) respectively fitted in the ring grooves (7, 8); partitioning means (14) for partitioning an annular space (11) between the piston rings (9, 10) into a thrust side semiannular space (12) and an anti-thrust side semiannular space (13); and communicating means (16) for allowing the space (12) to communicate with a combustion chamber (15) where a fuel-air mixture is burned.

## Description

### TECHNICAL FIELD

The present invention relates to a reciprocating engine.

### BACKGROUND ART

In a reciprocating engine, a technique has been proposed in which, to reduce sliding frictional resistance between a cylinder and a piston in the reciprocating motion of the piston, a gas chamber, into which combustion gases from a combustion chamber are introduced and in which they are stored, is formed between an inner surface of the cylinder and a side surface of the piston opposing this inner surface. The piston is caused to float from the inner surface of the cylinder by the gas pressure of the combustion gases in this gas chamber, thereby reducing the sliding frictional resistance between the inner surface of the cylinder and the side surface of the piston in the reciprocating motion of the piston. As one example of such a proposed reciprocating engine, there is an engine in which an annular space is formed between a first piston ring disposed adjacent to an upper surface of the piston defining the combustion chamber where a fuel-air mixture is burned and a second piston ring disposed adjacent to this first piston ring. This annular space is partitioned into a thrust side semiannular space and an anti-thrust side semiannular space, and a gas passage is formed in a side wall of the cylinder to allow the thrust side semiannular space to communicate with the combustion chamber when the piston is located in the vicinity of the top dead center.

Incidentally, in the above-described example of the engine, as for the piston ring, in a state in which it is fitted in the piston ring groove, its outer peripheral surface is brought into contact with the inner surface of the cylinder by the resiliency of that piston ring and the gas pressure acting on its inner peripheral surface. Therefore, a gap is created between the inner peripheral surface of the piston ring and the side surface of the piston, so that there is a possibility that the thrust side space and the anti-thrust side space which are partitioned as described above are communicated with each other through this gap. In consequence, the combustion gases introduced into the thrust side space can leak into the anti-thrust side space through the gap, and the gas pressure can become insufficient, causing the piston to fail to float from the inner surface of the cylinder in the combustion stroke. Thus, there is a possibility that it is impossible to effectively obtain a reduction in the sliding frictional resistance between the piston and the inner surface of the cylinder.

In addition, as the combustion gases introduced into the thrust side space leak into the anti-thrust side space through the aforementioned gap, a cushion based on the gas pressure vanishes. Hence, it is impossible to reduce the hammering sound which is produced as the piston strikes against the inner surface of the cylinder in conjunction with the reciprocating motion of the piston.

The present invention has been devised in view of the above-described various aspects, and its object is to provide a reciprocating engine which makes it possible to effectively obtain a reduction in the sliding frictional resistance between the piston and the inner surface of the cylinder, and reduce the hammering sound between the piston and the inner surface of the cylinder.

### DISCLOSURE OF THE INVENTION

A reciprocating engine in accordance with a first aspect of the invention comprises: first and second ring grooves disposed adjacent to each other in a reciprocating direction of a piston and formed in a side surface of the piston; first and second piston rings respectively fitted in the first and second ring grooves; partitioning means for partitioning a space between the first and second piston rings into a thrust side space and an anti-thrust side space; and communicating means for allowing the thrust side space to communicate with a combustion chamber, the communicating means having a plurality of communicating passages provided in an inner surface of a cylinder, and being adapted to allow the thrust side space to communicate with the combustion chamber through the plurality of communicating passages.

According to the reciprocating engine in accordance with the first aspect of the invention, the communicating means has the plurality of communicating passages provided in the inner surface of the cylinder, and is adapted to allow the thrust side space to communicate with the combustion chamber through the plurality of communicating passages. As such, the combustion gases in the combustion chamber can be introduced speedily and sufficiently into the thrust side space. Accordingly, the piston can be supported by a cushion based on the gas pressure of the combustion gases introduced into the thrust side space with respect to the slap motion and rotational motion of that piston. Thus, it is possible to effectively obtain a reduction in the sliding frictional resistance between the piston and the cylinder in the reciprocating motion of the piston, and reduce the hammering sound between the piston and the inner surface of the cylinder. It should be noted that the communicating passages may be in any form, such as through holes, grooves, recesses, or the like.

Regarding the reciprocating engine in accordance with a second aspect of the invention, in the reciprocating engine in accordance with the first aspect of the invention, the communicating means is adapted to allow the thrust side space to communicate with the combustion chamber when the piston is located in a vicinity of a top dead center.

Regarding the reciprocating engine in accordance with a third aspect of the invention, in the reciprocating engine in accordance with the first or second aspect of the invention, the partitioning means has a hampering member disposed in the second ring groove so as to hamper mutual communication between the thrust side space and the anti-thrust side space through a gap created between a bottom surface defining the second ring groove and an inner peripheral surface of the second piston ring opposing the bottom surface.

According to the reciprocating engine in accordance with the third aspect of the invention, the partitioning means has the hampering member disposed in the second ring groove so as to hamper mutual communication between the thrust side space and the anti-thrust side space through the gap created between the bottom surface defining the second ring groove and the inner peripheral surface of the second piston ring opposing the bottom surface. As such, it is possible to prevent the leakage of the combustion gases introduced into the thrust side space, and it is hence possible to sufficiently maintain the gas pressure of the high-pressure gases introduced into the thrust side space. Accordingly, it is possible to allow the piston to float in opposition to the lateral pressure of the piston with respect to the thrust side inner surface of the cylinder by virtue of the gas pressure in the thrust side space. Thus, it is possible to effectively obtain a reduction in the sliding frictional resistance between the piston and the cylinder, and reduce the hammering sound between the piston and the inner surface of the cylinder due to the slap motion and rotational motion of the piston.

A reciprocating engine in accordance with a fourth aspect of the invention comprises: first and second ring grooves disposed adjacent to each other in a reciprocating direction of a piston and formed in a side surface of the piston; first and second piston rings respectively fitted in the first and second ring grooves; partitioning means for partitioning a space between said first and second piston rings into a thrust side space and an anti-thrust side space; and communicating means for allowing the thrust side space to communicate with a combustion chamber, the partitioning means having a hampering member disposed in the second ring groove so as to hamper mutual communication between the thrust side space and the anti-thrust side space through a gap created between a bottom surface defining the second ring groove and an inner peripheral surface of the second piston ring opposing the bottom surface.

According to the reciprocating engine in accordance with the fourth aspect of the invention, the partitioning means has the hampering member disposed in the second ring groove so as to hamper mutual communication between the thrust side space and the anti-thrust side space through the gap created between the bottom surface defining the second ring groove and the inner peripheral surface of the second piston ring opposing the bottom surface. As such, it is possible to prevent the leakage of the combustion gases introduced into the thrust side space, and the piston can be supported away from the inner surface of the cylinder by means of the gas pressure in the thrust side space. Thus, it is possible to effectively obtain a reduction in the frictional resistance between the piston and the inner surface of the cylinder, and reduce the hammering sound between the piston and the inner surface of the cylinder.

Regarding the reciprocating engine in accordance with a fifth aspect of the invention, in the reciprocating engine in accordance with the fourth aspect of the invention, the communicating means has a plurality of communicating passages provided in an inner surface of a cylinder, and is adapted to allow the thrust side space to communicate with the combustion chamber through the plurality of communicating passages.

According to the reciprocating engine in accordance with the fifth aspect of the invention, the communicating means has the plurality of communicating passages provided in the inner surface of the cylinder, and is adapted to allow the thrust side space to communicate with the combustion chamber through the plurality of communicating passages. As such, the combustion gases in the combustion chamber can be introduced speedily and sufficiently into the thrust side space. Accordingly, the piston can be supported by a cushion based on the gas pressure of the combustion gases introduced into the thrust side space with respect to the slap motion and rotational motion of that piston. Thus, it is possible to effectively obtain a reduction in the sliding frictional resistance between the piston and the cylinder in the reciprocating motion of the piston, and reduce the hammering sound between the piston and the inner surface of the cylinder. It should be noted that these communicating passages may be in any form, such as through holes, grooves, recesses, or the like.

Regarding the reciprocating engine in accordance with a sixth aspect of the invention, in the reciprocating engine in accordance with the fourth or fifth aspect of the invention, the communicating means is adapted to allow the thrust side space to communicate with the combustion chamber when the piston is located in a vicinity of a top dead center.

Regarding the reciprocating engine in accordance with a seventh aspect of the invention, in the reciprocating engine in accordance with any one of the third to sixth aspects of the invention, the second ring groove is disposed in the side surface of the piston such that the first ring groove is located between the same and a head end face of the piston.

Regarding the reciprocating engine in accordance with an eighth aspect of the invention, in the reciprocating engine in accordance with any one of the third to seventh aspects of the invention, the partitioning means has at least one pair of hampering members disposed in such a manner as to oppose each other along an axial direction of a piston pin coupling the piston and a connecting rod.

According to the reciprocating engine in accordance with the eighth aspect of the invention, the partitioning means has the at least one pair of hampering members disposed in such a manner as to oppose each other along the axial direction of the piston pin coupling the piston and the connecting rod. As such, the gas pressure of the combustion gases introduced into the thrust side space can be maintained sufficiently. Accordingly, the piston can be floatingly supported away from the thrust side inner surface of the cylinder, and the piston can be slid in a state of being closely fitted to the anti-thrust side inner surface of the cylinder. Thus, it is possible to suppress the runout (rotational motion and slap motion) of the piston.

Regarding the reciprocating engine in accordance with a ninth aspect of the invention, in the reciprocating engine in accordance with any one of the third to eighth aspects of the invention, the partitioning means has at least one pair of partitioning members provided between the first and second piston rings, and the pair of partitioning members are disposed in such a manner as to oppose each other along the axial direction of the piston pin coupling the piston and the connecting rod.

According to the reciprocating engine in accordance with the ninth aspect of the invention, the partitioning means has the at least one pair of partitioning members provided between the first and second piston rings, and the pair of partitioning members are disposed in such a manner as to oppose each other along the axial direction of the piston pin coupling the piston and the connecting rod. As such, as the combustion gases are introduced into the thrust side space, the piston can be supported with the cushion based on the gas pressure of the combustion gases introduced into the thrust side space with respect to the slap motion and the rotational motion of that piston. Thus, it is possible to effectively obtain a reduction in the sliding frictional resistance between the piston and the cylinder in the reciprocating motion of the piston, and reduce the hammering sound between the piston and the inner surface of the cylinder.

Regarding the reciprocating engine in accordance with a 10th aspect of the invention, in the reciprocating engine in accordance with the ninth aspect of the invention, the partitioning member and the hampering member are disposed in such a manner as to be aligned in the reciprocating direction of the piston.

According to the reciprocating engine in accordance with the 10th aspect of the invention, the partitioning member and the hampering member are disposed in such a manner as to be aligned in the reciprocating direction of the piston. As such, it is possible to prevent a situation in which a gap is created between the hampering member and the partitioning member, resulting in the leakage of the combustion gases introduced into the thrust side space.

Regarding the reciprocating engine in accordance with an 11th aspect of the invention, in the reciprocating engine in accordance with the ninth or 10th aspect of the invention, the partitioning means has a pair of urging members for respectively urging the pair of partitioning members resiliently toward the inner surface of the cylinder.

According to the reciprocating engine in accordance with the 11th aspect of the invention, the partitioning means has the pair of urging members for respectively urging the pair of partitioning members resiliently toward the inner surface of the cylinder. As such, it is possible to prevent the combustion gases introduced into the thrust side space from leaking to the anti-thrust side space in each operating stroke of the reciprocating engine. For example, even in cases where a rotational motive force or a slap motive force has occurred in the piston on the basis of the gas pressure and the inertial force applied to the head end face of the piston, the partitioning member and the inner surface of the cylinder can be brought into close contact with each other by the resilient urging force of the pair of urging members. Hence, it is possible to maintain gastightness between the thrust side space and the anti-thrust side space without causing the high-pressure gases introduced into the thrust side space to leak to the anti-thrust side space.

Regarding the reciprocating engine in accordance with a 12th aspect of the invention, in the reciprocating engine in accordance with the 11th aspect of the invention, the pair of urging members are respectively disposed in such a manner as to oppose each other along the axial direction of the piston pin coupling the piston and the connecting rod.

According to the reciprocating engine in accordance with the 12th aspect of the invention, the pair of urging members are respectively disposed in such a manner as to oppose each other along the axial direction. As such, for example, even in cases where a rotational motive force or a slap motive force has occurred in the piston on the basis of the gas pressure and the inertial force applied to the head end face of the piston, the partitioning member and the inner surface of the cylinder can be brought into close contact with each other by the resilient urging force of the pair of urging members. Hence, it is possible to maintain gastightness between the thrust side space and the anti-thrust side space without causing the high-pressure gases introduced into the thrust side space to leak to the anti-thrust side space. Accordingly, the piston can be floatingly supported away from the thrust side inner surface of the cylinder, and the piston can be slid in the state of being closely fitted to the anti-thrust side inner surface of the cylinder. Thus, it is possible to suppress the runout (rotational motion and slap motion) of the piston.

Regarding the reciprocating engine in accordance with a 13th aspect of the invention, in the reciprocating engine in accordance with the 11th or 12th aspect of the invention, the urging member comprises a spring. It should be noted that the spring consists of, for instance, a leaf spring, a coil spring, or the like.

Regarding the reciprocating engine in accordance with a 14th aspect of the invention, in the reciprocating engine in accordance with any one of the ninth to 13th aspects of the invention, the partitioning means has a pair of groove portions formed in the side surface of the piston between the first and second piston rings and recessed toward the inner surface of the cylinder, and the partitioning members are respectively disposed in spaces respectively defined by the pair of groove portions.

According to the reciprocating engine in accordance with the 14th aspect of the invention, since the partitioning members are respectively disposed in the spaces respectively defined by the pair of groove portions, it is possible to maintain the gastightness between the thrust side space and the anti-thrust side space. Thus, it is possible to prevent the combustion gases introduced into the thrust side space from leaking to the anti-thrust side space in each operating stroke of the reciprocating engine.

Regarding the reciprocating engine in accordance with a 15th aspect of the invention, in the reciprocating engine in accordance with any one of the third to 14th aspects of the invention, the partitioning means has a pressing member disposed in the second ring groove and adapted to resiliently press the hampering member toward the inner peripheral surface of the second piston ring.

According to the reciprocating engine in accordance with the 15th aspect of the invention, the partitioning means has the pressing member for resiliently pressing the hampering member toward the inner peripheral surface of the piston ring. As such, it is possible to prevent the combustion gases introduced into the thrust side space from leaking to the anti-thrust side space in each operating stroke of the reciprocating engine, and the gas pressure of the combustion gases introduced into the thrust side space can be maintained sufficiently. Accordingly, the piston can be floatingly supported away from the thrust side inner surface of the cylinder, and the piston can be slid in the state of being closely fitted to the anti-thrust side inner surface of the cylinder. Thus, it is possible to suppress the runout (rotational motion and slap motion) of the piston.

Regarding the reciprocating engine in accordance with a 16th aspect of the invention, in the reciprocating engine in accordance with the 15th aspect of the invention, the partitioning means has a pair of the pressing members opposing each other along the axial direction of the piston pin coupling the piston and the connecting rod.

According to the reciprocating engine in accordance with the 16th aspect of the invention, the partitioning means has the pair of the pressing members opposing each other along the axial direction of the piston pin. As such, for example, even in cases where a rotational motive force or a slap motive force has occurred in the piston on the basis of the gas pressure and the inertial force applied to the head end face of the piston, the hampering member and the inner surface of the cylinder can be brought into close contact with each other by the resilient urging force of the pair of pressing members. Hence, it is possible to maintain gastightness between the thrust side space and the anti-thrust side space without causing the high-pressure gases introduced into the thrust side space to leak to the anti-thrust side space. Accordingly, the piston can be floatingly supported away from the thrust side inner surface of the cylinder, and the piston can be slid in the state of being closely fitted to the anti-thrust side inner surface of the cylinder. Thus, it is possible to suppress the runout of the piston.

Regarding the reciprocating engine in accordance with a 17th aspect of the invention, in the reciprocating engine in accordance with the 15th or 16th aspect of the invention, the pressing member comprises a spring. It should be noted that the spring consists of, for instance, a leaf spring, a coil spring, or the like.

Regarding the reciprocating engine in accordance with an 18th aspect of the invention, in the reciprocating engine in accordance with any one of the third to 17th aspects of the invention, the partitioning means has a recessed portion disposed in the bottom surface defining the second ring groove and recessed toward the inner peripheral surface of the second piston ring, and the hampering member is disposed in a space defined by the recessed portion.

According to the reciprocating engine in accordance with the 18th aspect of the invention, since the hampering member is disposed in the space defined by the recessed portion, it is possible to eliminate the positional offset of the hampering member occurring due to such as the gas pressure of the combustion gases introduced to the thrust side.

Regarding the reciprocating engine in accordance with a 19th aspect of the invention, in the reciprocating engine in accordance with any one of the third to 18th aspects of the invention, the first piston ring is disposed adjacent to the head end face of the piston, and is disposed in the first ring groove such that a ring gap of the first piston ring is located on a thrust-side space side with respect to the hampering member.

Regarding the reciprocating engine in accordance with a 20th aspect of the invention, in the reciprocating engine in accordance with any one of the third to 19th aspects of the invention, the second piston ring is disposed in the side surface of the piston such that the first piston ring is located between the same and the head end face of the piston, and the second piston ring is disposed in the second ring groove such that a ring gap of the second piston ring is located on an anti-thrust-side space side with respect to the hampering member.

Regarding the reciprocating engine in accordance with a 21 st aspect of the invention, in the reciprocating engine in accordance with any one of the third to 20th aspects of the invention, the hampering member comprises a pin. It should be noted that the pin may be integrally secured to the piston ring. In addition, the pin may be in any shape, such as a quadrangular prism, a cylinder, or an elliptic cylinder.

Regarding the reciprocating engine in accordance with a 22nd aspect of the invention, in the reciprocating engine in accordance with any one of the first to 21 st aspects of the invention, the piston is coupled to the connecting rod by means of the piston pin, and the piston pin is provided in the piston such that a line connecting an axis of the piston pin and an axis of a crankshaft is inclined toward the anti-thrust side with respect to a line connecting a center of the piston and the axis of the crankshaft.

According to the reciprocating engine in accordance with the 22nd aspect of the invention, since the axis of the piston pin is off-centered toward the anti-thrust side relative to the center of the piston, it is possible to reduce the rotational torque of the piston acting in a direction in which the piston is strongly struck against the inner surface of the cylinder in each operating stroke of the reciprocating engine. Thus, it is possible to reduce the hammering sound between the piston and the inner surface of the cylinder. It should be noted that the reciprocating engine in accordance with the 22nd aspect of the invention can be embodied by a four-cycle reciprocating engine, a reciprocating diesel engine, or the like, but may be embodied particularly by a reciprocating diesel engine in which the auxiliary combustion chamber is disposed on the anti-thrust side of the cylinder head portion of the cylinder.

It should be noted that the reciprocating engine in accordance with any one of the first to 22nd aspects of the invention is capable of suitably exhibiting the effects derived from the invention even in a four-cycle engine, a two-cycle engine, or a diesel engine.

According to the invention, it is possible to provide a reciprocating engine which makes it possible to reliably prevent the leakage of the combustion gases introduced into the thrust side space, effectively obtain a reduction in the sliding frictional resistance between the cylinder and the piston in the reciprocating motion of the piston, and reduce the hammering sound between the piston and the inner surface of the cylinder.

Hereafter, a more detailed description will be given of the mode for carrying out the invention on the basis of the preferred embodiments illustrated in the drawings. It should be noted that the invention is not limited to these embodiments.

### BRIEF DESCRIPTION OF THE DRAWINGS

Fig. 1 is an explanatory front elevational view of one embodiment of a reciprocating engine in accordance with the invention;
Fig. 2 is an explanatory front elevational view of the embodiment shown in Fig. 1;
Fig. 3 is an explanatory cross-sectional view, taken along line III - III, of the embodiment shown in Fig. 1;
Fig. 4 is a partially enlarged explanatory diagram of Fig. 3;
Fig. 5 is an explanatory cross-sectional view, taken along line V - V, of the embodiment shown in Fig. 1;
Fig. 6 is an explanatory cross-sectional view, taken along line VI - VI, of the embodiment shown in Fig. 1;
Fig. 7 is a diagram explaining the operation of the embodiment shown in Fig. 1;
Fig. 8 is a diagram explaining the operation of the embodiment shown in Fig. 1;
Fig. 9 is an explanatory front elevational view of another embodiment of the reciprocating engine in accordance with the invention;
Fig. 10 is an explanatory side cross-sectional view of the embodiment shown in Fig. 9;
Fig. 11 is a diagram explaining the operation of the embodiment shown in Fig. 9;
Fig. 12 is a diagram explaining the operation of the embodiment shown in Fig. 9; and
Fig. 13 is a diagram explaining the operation of the embodiment shown in Fig. 9.

### EMBODIMENT

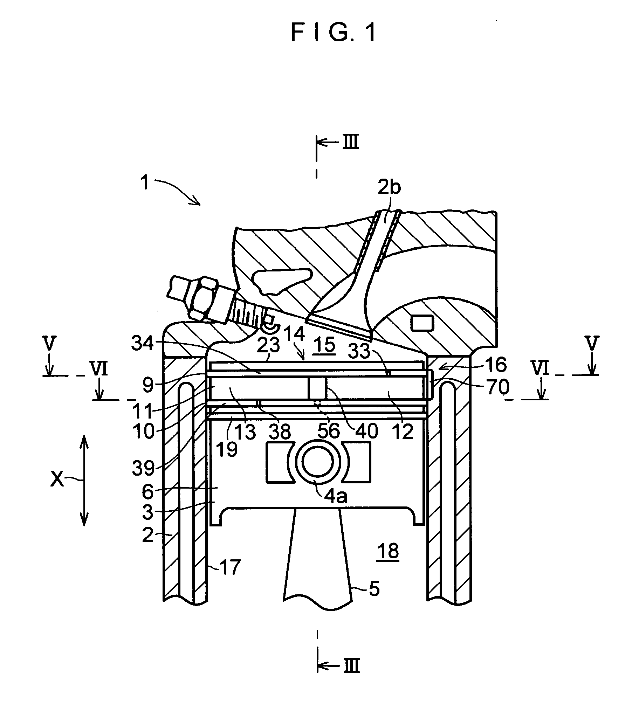

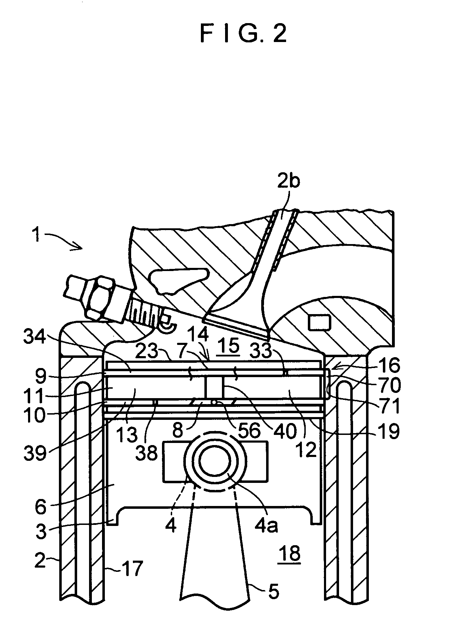

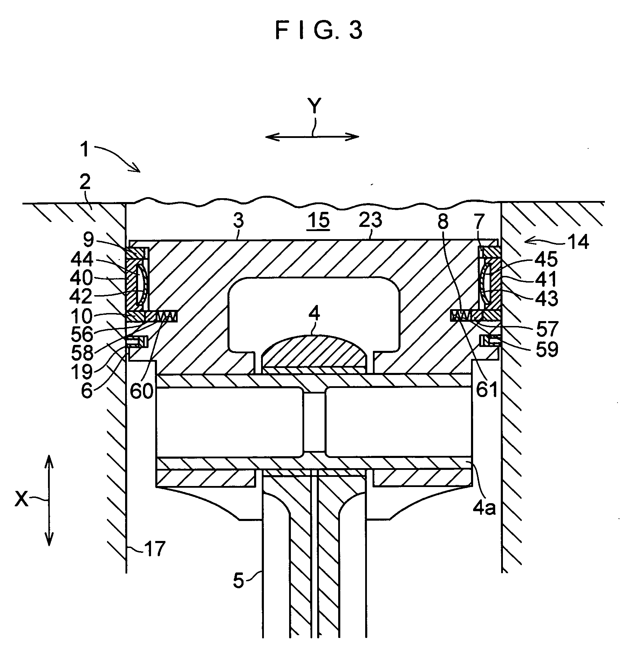

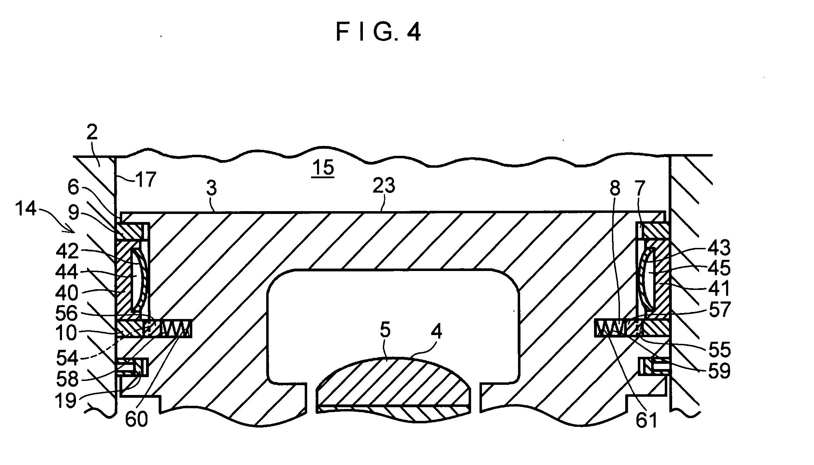

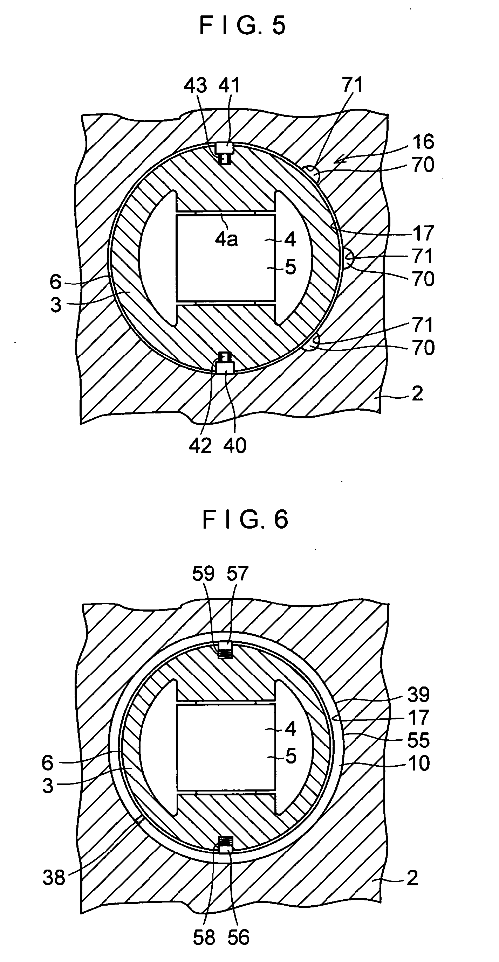

In Figs. 1 to 8, a four-cycle reciprocating engine (four-cycle gasoline engine) 1 in accordance with this embodiment is comprised of a cylinder 2; a piston 3 reciprocating in the cylinder 2 in a direction X; a connecting rod 5 rotatably coupled at its small end portion 4 to the piston 3 through a piston pin 4a; ring grooves 7 and 8 disposed adjacent to each other in the direction X and formed in a peripheral side surface 6 of the piston 3; piston rings 9 and 10 respectively fitted in the ring grooves 7 and 8; a partitioning means 14 for partitioning an annular space 11 between the piston rings 9 and 10 into a thrust side semiannular space 12 and an anti-thrust side semiannular space 13; and a communicating means 16 for allowing the space 12 to communicate with a combustion chamber 15 where a fuel-air mixture is burned.

The cylinder 2 has a cylindrical space 18 defined by its inner surface 17, and the piston 3 is disposed in the space 18 so as to be reciprocatable in the direction X. An intake valve (not shown) and an exhaust valve 2b are provided in the cylinder 2.

The piston 3 in this embodiment has an oil ring 19 on its peripheral side surface 6.

The connecting rod 5 is coupled at its large end portion (not shown) to a rotatable crankshaft (not shown).

The ring grooves 7 and 8 are respectively annular along the peripheral side surface 6. The ring groove 7 is disposed adjacent to a head end face (top face or crown face) 23 of the piston 3 defining the combustion chamber 15, while the ring groove 8 is disposed in the peripheral side surface 6 such that the ring groove 7 is located between the same and the head end face 23.

The piston ring (top ring or gas ring) 9 is disposed adjacent to the head end face 23. The piston ring 9 is disposed in the ring groove 7 such that its ring gap 33 is located on the space 12 side with respect to hampering members 56 and 57. The piston ring 9 resiliently abuts at its outer peripheral surface 34 against the inner surface 17.

The piston ring (second ring or gas ring) 10 is disposed on the peripheral side surface 6 such that the piston ring 9 is located between the same and the head end face 23. The piston ring 10 is disposed in the ring groove 8 such that its ring gap 38 is located on the space 13 side with respect to the hampering members 56 and 57. The piston ring 10 resiliently abuts at its outer peripheral surface 39 against the inner surface 17.

The partitioning means 14 includes partitioning members 40 and 41 provided between the piston rings 9 and 10; a spring 42 serving as an urging member for resiliently urging the partitioning member 40 toward the inner surface 17; a spring 43 serving as an urging member for resiliently urging the partitioning member 41 toward the inner surface 17; groove portions 44 and 45 which are disposed in the peripheral side surface 6, are located between the piston rings 9 and 10, and are recessed toward the inner surface 17; the hampering members 56 and 57 disposed in the ring groove 8 so as to hamper the mutual communication between the spaces 12 and 13 through a gap created between a bottom surface 54 defining the ring groove 8 and an inner peripheral surface 55 of the piston ring 10 opposing the bottom surface 54; coil springs 58 and 59 disposed in the ring groove 8 and serving as pressing members for respectively pressing the hampering members 56 and 57 resiliently toward the inner peripheral surface 55 of the piston ring 10; and recessed portions (hole portions) 60 and 61 disposed in the bottom surface 54 and recessed toward the inner peripheral surface 55 of the piston ring 10. Each of the hampering members 56 and 57 is formed by a cylindrical pin in this embodiment.

The partitioning member 40 is disposed in the space defined by the groove portion 44, while the partitioning member 41 is disposed in the space defined by the groove portion 45.

The hampering member 56 and the coil spring 58 are disposed in the space defined by the recessed portion 60, while the hampering member 57 and the coil spring 59 are disposed in the space defined by the recessed portion 61.

The positioning members 40 and 41, the springs 42 and 43, the groove portions 44 and 45, the hampering members 56 and 57, the coil springs 58 and 59, and the recessed portions 60 and 61 are disposed in such a manner as to oppose each other along an axial direction Y of the piston pin 4a.

The partitioning member 40 and the hampering member 56 are respectively disposed in such a manner as to be aligned in the direction X, while the partitioning member 41 and the hampering member 57 are respectively disposed in such a manner as to be aligned in the direction X.

According to the above-described partitioning means 14, the hampering members 56 and 57 are respectively disposed in the ring groove 8, and they are respectively pressed resiliently by the coil springs 58 and 59. Thus, in each operating stroke of the reciprocating engine 1, the spaces 12 and 13 are hampered from communicating with each other through the ring groove 8. In addition, the partitioning members 40 and 41 are respectively disposed between the piston rings 9 and 10, and they are respectively pressed resiliently by the springs 42 and 43. Thus, in each operating stroke of the reciprocating engine 1, the spaces 12 and 13 are hampered from communicating with each other. Further, even if, for instance, the piston 3 has undergone rotational motion within a plane perpendicular to the direction Y owing to gas pressure and inertial force, it is possible to prevent a gap from being created between each of the hampering members 56 and 57 and the piston ring 10. At the same time, it is possible to prevent a gap from being created between each of the partitioning members 40 and 41 and the inner surface 17 of the cylinder 2. Therefore, it is possible to maintain the gas pressure of the combustion gases introduced into the thrust side space 12.

The communicating means 16 has a plurality of communicating passages 70 provided in the inner surface 17 of the cylinder 2 on the thrust side. The plurality of communicating passages 70 are disposed to allow the space 12 to communicate with the combustion chamber 15 through the communicating passages 70 when the piston 3 is located in the vicinity of the top dead center. In this embodiment, each communicating passage 70 is defined in a recessed portion 71 formed in the inner surface 17 of the cylinder 2.

Hereafter, a description will be given of the operation of the reciprocating engine 1 in accordance with this embodiment.

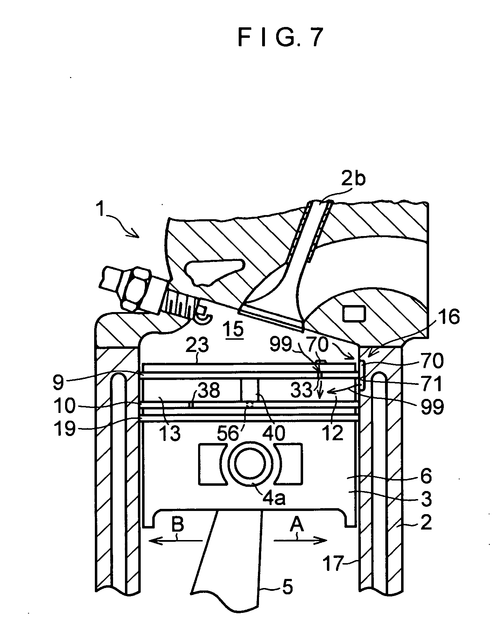

In the combustion stroke of the fuel-air mixture, which is started after the completion of the compression stroke, as shown in Fig. 7, after the piston 3 has passed the top dead center and while the piston 3 is located in the vicinity of that top dead center, the gas pressure of combustion gases 99 increases, and the piston 3 is subjected to the increased gas pressure, so that the piston 3 accelerates toward the bottom dead center. At the same time, the combustion gases 99 are introduced into the thrust side space 12 by allowing the thrust side space 12 to communicate with the combustion chamber 15 through the plurality of communicating passages 70. Here, as a forward moving force is imparted from the piston 3 to the connecting rod 5 which is inclined with respect to the direction X, lateral pressure A which is directed toward the thrust side is imparted to the piston 3. However, counter-lateral pressure B which is directed toward the anti-thrust side is imparted in opposition to the lateral pressure A to the piston 3 by the gas pressure of the combustion gases 99 introduced into the space 12, thereby causing the piston 3 to float by the gases.

In the above-described manner, during the combustion stroke, the sliding frictional resistance is substantially reduced on the thrust side between each of the piston rings 9 and 10 and the inner surface 17 of the cylinder 2 which occurs on the basis of the lateral pressure A. Further, the counter-lateral pressure B imparted to the piston 3 can be maintained since the combustion gases 99 introduced into the space 12 are prevented from leaking to the space 13 side through the ring groove 8 by means of the hampering members 56 and 57 which are respectively pressed resiliently by the coil springs 58 and 59. It should be noted that in the combustion stroke the piston 3 moves forward to the vicinity of the bottom dead center.

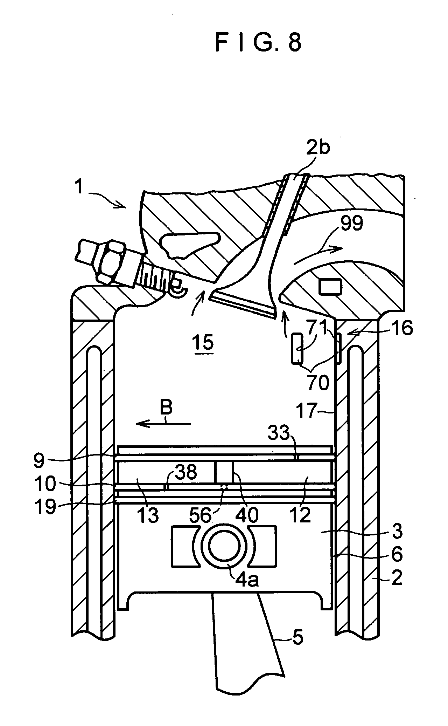

Also in the exhaust stroke of the combustion gases 99 which is started after completion of the combustion stroke, as shown in Fig. 8, the counter-lateral pressure B based on the gas pressure of the combustion gases 99 introduced into the space 12 in the above-described exhaust stroke is maintained, causing the piston 3 to float by the gases. As a result, the swinging motion of the piston 3 within the plane perpendicular to the direction Y is suppressed.

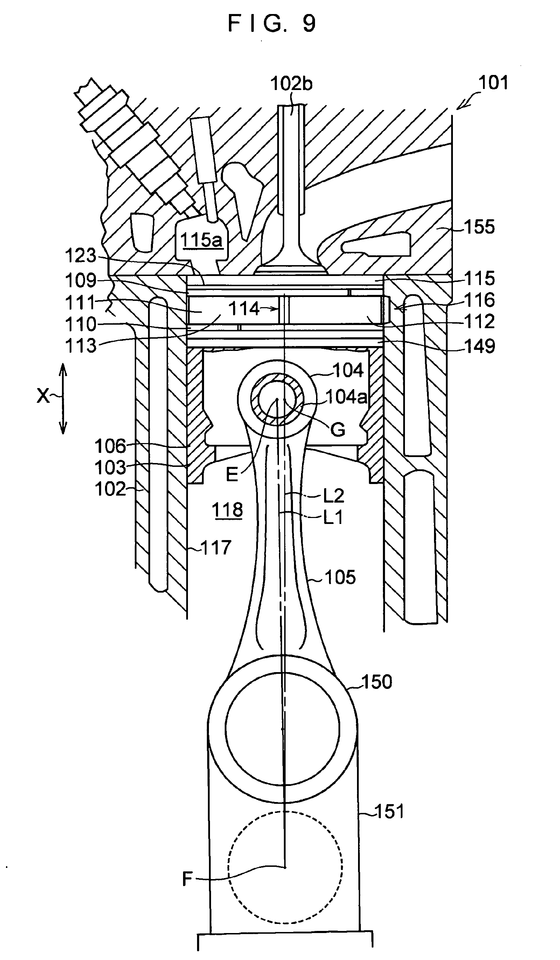

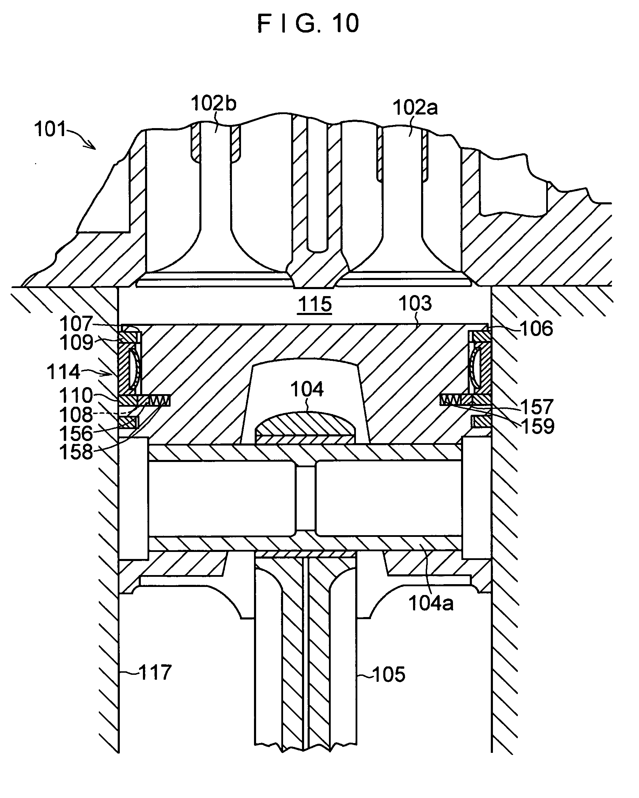

In Figs. 9 to 13, a reciprocating diesel engine 101 in accordance with another embodiment is comprised of a cylinder 102; a piston 103 reciprocating in the cylinder 102 in the direction X; a connecting rod 105 rotatably coupled at its small end portion 104 to the piston 103 through a piston pin 104a; ring grooves 107 and 108 disposed adjacent to each other in the direction X and formed in a peripheral side surface 106 of the piston 103; piston rings 109 and 110 respectively fitted in the ring grooves 107 and 108; a partitioning means 114 for partitioning an annular space 111 between the piston rings 109 and 110 into a thrust side semiannular space 112 and an anti-thrust side semiannular space 113; and a communicating means 116 for allowing the space 112 to communicate with a main combustion chamber 115.

The cylinder 102 has a cylindrical space 118 defined by its inner surface 117, and the piston 103 is disposed in the space 118 so as to be reciprocatable in the direction X. An intake valve 102a, an exhaust valve 102b, and an auxiliary combustion chamber 115a for injecting fuel ignited in the main combustion chamber 115 are provided in a cylinder head portion 155 of the cylinder 102.

In this embodiment, the auxiliary combustion chamber 115a communicates with the main combustion chamber 115 on the anti-thrust side, and is adapted to inject the fuel into the main combustion chamber 115 so that the injected fuel expands from the anti-thrust side toward the thrust side in the main combustion chamber 115.

The piston 103 in this embodiment has an oil ring 149.

The connecting rod 105 is coupled at its large end portion 150 to a rotatable crankshaft 151.

The piston pin 104a is provided in the piston 103 such that a line L1 connecting an axis E of the piston pin 104a and an axis F of the crankshaft 151 is inclined toward the anti-thrust side with respect to a line L2 connecting a center G of the piston 103 and the axis F. The arrangement provided is such that the rotational torque of the piston 103 in the direction in which the piston 103 is strongly struck against the inner surface 117 of the cylinder 102 is reduced in each operating stroke of the reciprocating diesel engine 101.

The ring grooves 107 and 108, the piston rings 109 and 110, the partitioning means 114, and the communicating means 116 are respectively formed in the same way as the ring grooves 7 and 8, the piston rings 9 and 10, the partitioning means 14, and the communicating means 16 of the above-described reciprocating engine 1. Therefore, a description thereof will be omitted.

Hereafter, a description will be given of the operation of the reciprocating diesel engine 101.

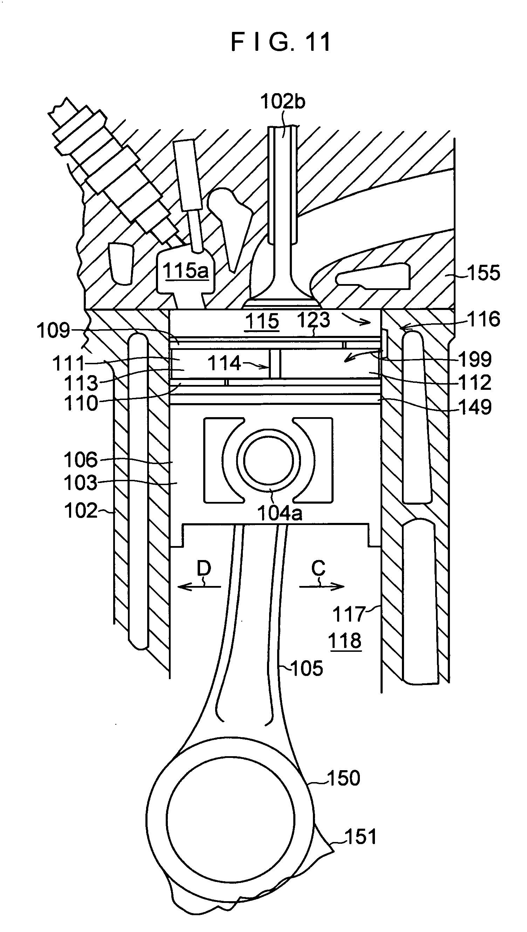

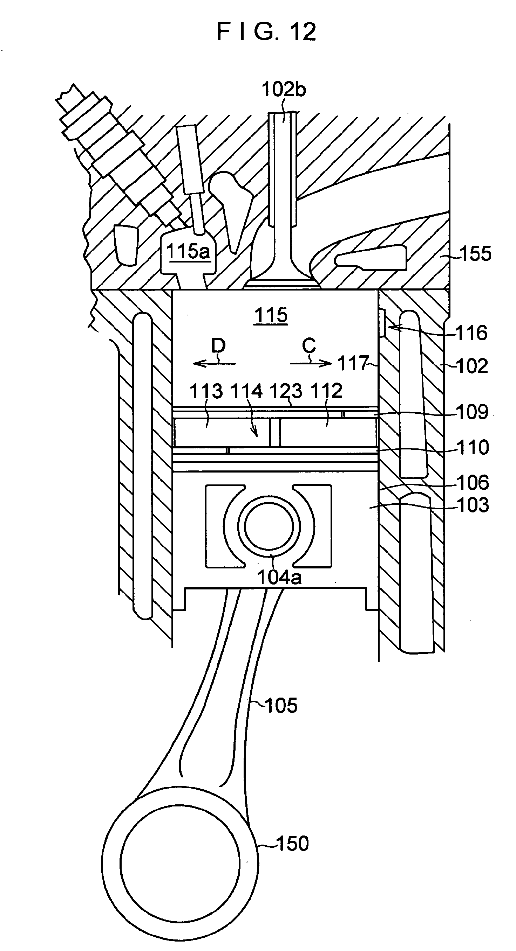

As shown in Figs. 11 and 12, in the combustion stroke which is started after the completion of the compression stroke, while the piston 103 is located in the vicinity of the top dead center, when the gas pressure of combustion gases 199 has increased, the piston 103 to which motive power is imparted by that gas pressure moves forward toward the bottom dead center. At the same time, the combustion gases 199 are introduced into the space 112 by allowing the space 112 to communicate with the main combustion chamber 115 by means of the communicating means 116. Here, as a forward moving force is imparted to the connecting rod 105 which is inclined with respect to the direction X, lateral pressure C which is directed toward the thrust side is imparted to the piston 103. However, counter-lateral pressure D which is directed toward the anti-thrust side is imparted in opposition to the lateral pressure C to the piston 103 by the gas pressure of the combustion gases 199 introduced into the space 112, thereby causing the piston 103 to float by the gases. In the above-described manner, during the combustion stroke, the sliding frictional resistance is substantially reduced on the thrust side between each of the piston rings 109 and 110 and the inner surface 117 of the cylinder 102 which occurs on the basis of the lateral pressure C. At the same time, it is possible to prevent the piston rings 109 and 110 from being strongly struck against the inner surface 117 on the thrust side. Further, the combustion gases 199 introduced into the space 112 are prevented from leaking to the space 113 side through the ring grooves 107 and 108 by means of hampering members 156 and 157 which are respectively pressed resiliently by coil springs 158 and 159.

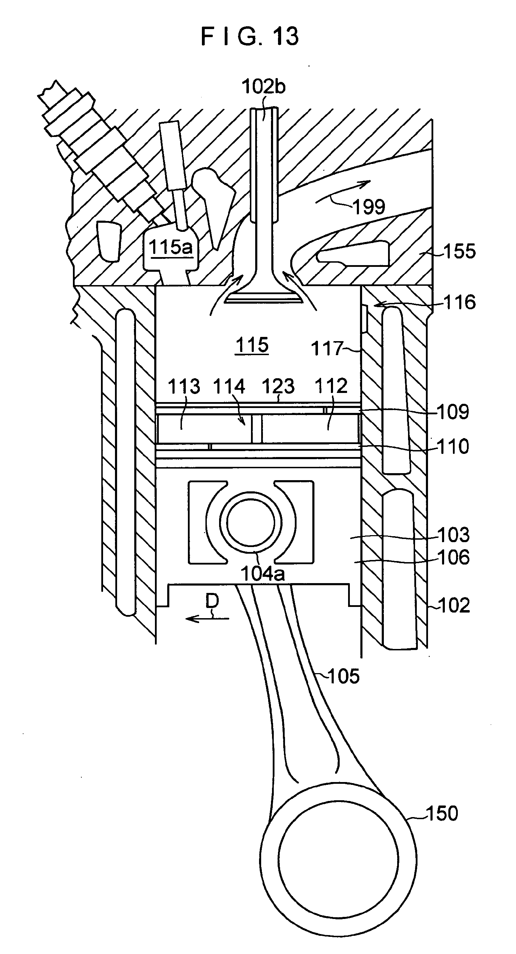

In the exhaust stroke of the combustion gases 199 which is started after completion of the combustion stroke, as shown in Fig. 13, the counter-lateral pressure D based on the gas pressure of the combustion gases 199 introduced into the space 112 is maintained. As a result, the swinging motion of the piston 103 within the plane perpendicular to the direction Y is suppressed.

In the compression stroke which is started after completion of the intake stroke, as the piston 103 located in the vicinity of the bottom dead center moves backward toward the vicinity of the top dead center, the air which is present in the main combustion chamber 115 is compressed to set that air under high pressure and high temperature. It should be noted that in that compression stroke the above-described combustion stroke is started after the piston 103 has moved backward to the vicinity of the top dead center.

It should be noted that in a case where the reciprocating diesel engine 101 in accordance with this embodiment is provided with a cylinder liner, the communicating means 116 may be provided in that cylinder liner.

## Claims

1. A reciprocating engine comprising: first and second ring grooves disposed adjacent to each other in a reciprocating direction of a piston and formed in a side surface of said piston; first and second piston rings respectively fitted in said first and second ring grooves; partitioning means for partitioning a space between said first and second piston rings into a thrust side space and an anti-thrust side space; and communicating means for allowing the thrust side space to communicate with a combustion chamber, said communicating means having a plurality of communicating passages provided in an inner surface of a cylinder, and being adapted to allow the thrust side space to communicate with said combustion chamber through said plurality of communicating passages.

2. The reciprocating engine according to claim 1, wherein said communicating means is adapted to allow the thrust side space to communicate with said combustion chamber when said piston is located in a vicinity of a top dead center.

3. The reciprocating engine according to claim 1 or 2, wherein said partitioning means has a hampering member disposed in said second ring groove so as to hamper mutual communication between the thrust side space and the anti-thrust side space through a gap created between a bottom surface defining said second ring groove and an inner peripheral surface of said second piston ring opposing said bottom surface.

4. A reciprocating engine comprising: first and second ring grooves disposed adjacent to each other in a reciprocating direction of a piston and formed in a side surface of said piston; first and second piston rings respectively fitted in said first and second ring grooves; partitioning means for partitioning a space between said first and second piston rings into a thrust side space and an anti-thrust side space; and communicating means for allowing the thrust side space to communicate with a combustion chamber, said partitioning means having a hampering member disposed in said second ring groove so as to hamper mutual communication between the thrust side space and the anti-thrust side space through a gap created between a bottom surface defining said second ring groove and an inner peripheral surface of said second piston ring opposing said bottom surface.

5. The reciprocating engine according to claim 4, wherein said communicating means has a plurality of communicating passages provided in an inner surface of a cylinder, and is adapted to allow the thrust side space to communicate with said combustion chamber through said plurality of communicating passages.

6. The reciprocating engine according to claim 4 or 5, wherein said communicating means is adapted to allow the thrust side space to communicate with said combustion chamber when said piston is located in a vicinity of a top dead center.

7. The reciprocating engine according to any one of claims 3 to 6, wherein said second ring groove is disposed in the side surface of said piston such that said first ring groove is located between the same and a head end face of said piston.

8. The reciprocating engine according to any one of claims 3 to 7, wherein said partitioning means has at least one pair of hampering members disposed in such a manner as to oppose each other along an axial direction of a piston pin coupling said piston and a connecting rod.

9. The reciprocating engine according to any one of claims 3 to 8, wherein said partitioning means has at least one pair of partitioning members provided between said first and second piston rings, and said pair of partitioning members are disposed in such a manner as to oppose each other along the axial direction of said piston pin coupling said piston and said connecting rod.

10. The reciprocating engine according to claim 9, wherein said hampering member and said partitioning member are disposed in such a manner as to be aligned in the reciprocating direction of said piston.

11. The reciprocating engine according to claim 9 or 10, wherein said partitioning means has a pair of urging members for respectively urging said pair of partitioning members resiliently toward the inner surface of said cylinder.

12. The reciprocating engine according to claim 11, wherein said pair of urging members are respectively disposed in such a manner as to oppose each other along the axial direction of said piston pin coupling said piston and said connecting rod.

13. The reciprocating engine according to claim 11 or 12, wherein said urging member comprises a spring.

14. The reciprocating engine according to any one of claims 9 to 13, wherein said partitioning means has a pair of groove portions formed in the side surface of said piston between said first and second piston rings and recessed toward the inner surface of said cylinder, and said partitioning members are respectively disposed in spaces respectively defined by said pair of groove portions.

15. The reciprocating engine according to any one of claims 3 to 14, wherein said partitioning means has a pressing member disposed in said second ring groove and adapted to resiliently press said hampering member toward the inner peripheral surface of said second piston ring.

16. The reciprocating engine according to claim 15, wherein said partitioning means has a pair of said pressing members opposing each other along the axial direction of said piston pin connecting said piston and said connecting rod.

17. The reciprocating engine according to claim 15 or 16, wherein said pressing member comprises a spring.

18. The reciprocating engine according to any one of claims 3 to 17, wherein said partitioning means has a recessed portion disposed in the bottom surface defining said second ring groove and recessed toward the inner peripheral surface of said second piston ring, and said hampering member is disposed in a space defined by said recessed portion.

19. The reciprocating engine according to any one of claims 3 to 18, wherein said first piston ring is disposed adjacent to the head end face of said piston, and is disposed in said first ring groove such that a ring gap of said first piston ring is located on a thrust-side space side with respect to said hampering member.

20. The reciprocating engine according to any one of claims 3 to 19, wherein said second piston ring is disposed in the side surface of said piston such that said first piston ring is located between the same and the head end face of said piston, and said second piston ring is disposed in said second ring groove such that a ring gap of said second piston ring is located on an anti-thrust-side space side with respect to said hampering member.

21. The reciprocating engine according to any one of claims 3 to 20, wherein said hampering member comprises a pin.

22. The reciprocating engine according to any one of claims 1 to 21, wherein said piston is coupled to said connecting rod by means of said piston pin, and said piston pin is provided in said piston such that a line connecting an axis of said piston pin and an axis of a crankshaft is inclined toward the anti-thrust side with respect to a line connecting a center of said piston and the axis of said crankshaft.
